# EUROPEAN PATENT SPECIFICATION

(11) **EP 4 225 833 B1**
(45) Date of publication and mention of the grant of the patent: **03.04.2024**
(21) Application number: 21802774.6
(22) Date of filing: 11.11.2021
(51) Int. Cl.: C08J 3/12, C08J 3/20, C08J 3/205

(54) **PROCESS FOR PRODUCING A POLYETHYLENE COMPOSITION COMPRISING BIMODAL OR MULTIMODAL POLYETHYLENE**
VERFAHREN ZUR HERSTELLUNG EINER POLYETHYLENZUSAMMENSETZUNG MIT BIMODALEM ODER MULTIMODALEM POLYETHYLEN
PROCÉDÉ DE PRODUCTION D'UNE COMPOSITION DE POLYÉTHYLÈNE COMPRENANT DU POLYÉTHYLÈNE BIMODAL OU MULTIMODAL

(30) Priority: 16.11.2020 EP 20207781
(43) Date of publication of application: 16.08.2023
(73) Proprietor: Basell Polyolefine GmbH, 50389 Wesseling (DE)
(72) Inventor: MALUCELLI, Decio, 44122 Ferrara (IT); CONSALVI, Marco, 44122 Ferrara (IT)
(74) Representative: LyondellBasell
(86) International application number: PCT/EP2021/081372
(87) International publication number: WO 2022/101337

(56) References cited:
- EP-A1- 0 030 757
- EP-A1- 2 966 123
- EP-A1- 3 450 127
- WO-A1-2017/202802
- WO-A2-2013/101767
- US-A1- 2019 284 315

## Description

### FIELD OF THE INVENTION

The present disclosure provides a process for preparing a polyethylene composition comprising bimodal or multimodal polyethylene. The present disclosure provides in particular a process for preparing a polyethylene composition comprising bimodal or multimodal polyethylene having a density from 0.940 to 0.968 g/cm³ in an extruder device.

### BACKGROUND OF THE INVENTION

Polyethylenes are widely used commercial polymers. A significant application of polyethylenes is the preparation of pipes and in particular the preparation of pressure pipe, i.e. of pipes designed to transport fluids at conditions having a higher pressure inside the pipe than outside the pipe. Suitable materials for producing polyethylene pipes having excellent mechanical properties including a good pressure resistance over a long period of time and good chemical resistance are bimodal or multimodal polyethylenes having a density from 0.940 g/cm³ to 0.968 g/cm³.

To be applicable for the preparation of pipes, the polyethylenes further need to have a good processability in pipe extrusion. One aspect of this processability, especially for the production of large diameter pipes, is a high resistance of the resulting pipe to "sagging". "Sagging" is the effect that during melt extrusion of the pipe a portion of the melt may flow from an upper part of the pipe to a lower part of the resulting in unacceptable pipe wall thickness variation around the pipe circumference.

Various attempts have been made to improve the sagging behavior of bimodal or multimodal polyethylenes designated for the production of pipes. WO 2013/101767 A2, for example, discloses bimodal high-density polyethylene polymer compositions and articles made from these composition, preferably pipes and fittings. The bimodal high-density polyethylene polymer compositions are produced by feeding a bimodal high-density polyethylene base resin and peroxide into an extrusion device and mixing the polymer composition and the peroxide in the extrusion device until substantially homogeneous. A carrier is preferably used to deliver the peroxide to the extrusion device, for example as master batch in polypropylene.

WO 2016/005044 A1 relates to a multimodal polyethylene composition which can be manufactured into pipes. The multimodal polyethylene composition comprises a high density multimodal ethylene polymer component and an ultrahigh molecular weight ethylene polymer component. The high density multimodal polyethylene composition is preferably prepared in a compounding step prior to a pipe extrusion step. It is further disclosed that a peroxide masterbatch was added to induce LCB/cross-linking reaction during compounding.

WO 2016/064984 A1 relates to crosslinked metallocene-catalyzed polyethylene copolymers, and articles (e.g., pipe) made from same. The crosslinked metallocene-catalyzed polyethylene copolymers can be obtained by contacting a polyethylene copolymer base resin with a peroxide modifier. The peroxide modifier can be employed as a powder, as a master batch, in a carrier (e.g., polypropylene, calcium carbonate, etc.), or combinations thereof.

WO 2017/112642 A1 discloses polyethylene formulations comprising a partially crosslinked multimodal polyethylene composition which can be extruded into various shaped articles, such as, for example, pipes. The polyethylene formulation are obtained by combining a multimodal polyethylene resin with a peroxide masterbatch.

WO 2018/022885 A1 discloses pipes comprising bimodal high molecular weight high density polyethylene which has been extruded in the presence of one or more organic peroxides. In the method for preparing the pipes, a porous polypropylene random copolymer is employed as a carrier for the organic peroxides.

Nonetheless, there is still a need to provide polyethylene compositions comprising bimodal or multimodal polyethylene which have a high resistance to sagging and which have a reduced gel level.

### SUMMARY OF THE INVENTION

The present disclosure provides a process for preparing a polyethylene composition comprising bimodal or multimodal polyethylene in an extruder device comprising the steps of
a) supplying a bimodal or multimodal polyethylene having a density determined according to DIN EN ISO 1183-1 :2004 at 23°C from 0.940 g/cm³ to 0.968 g/cm³ in form of a polyethylene powder to a mixing device;
b) supplying one or more additives which are not organic peroxides to the mixing device;
c) mixing the polyethylene powder and the additives at a temperature in the range from 10°C to 100°C without melting the polyethylene powder to form a mixture;
d) transferring the mixture comprising the polyethylene powder and the additives from the mixing device into the extruder device;
e) melting and homogenizing the mixture comprising the polyethylene powder and the additives within the extruder device to form a molten polyethylene composition; and
f) pelletizing the molten polyethylene composition,
wherein a liquid comprising an organic peroxide is added to the polyethylene powder or to a mixture comprising the polyethylene powder in an amount from 20 ppm to 200 ppm of organic peroxide with respect to the polyethylene powder, and the liquid is added to the polyethylene powder at a position where mixing occurs and where the polyethylene powder has a temperature of from 10°C to 100°C.

In some embodiments, the liquid comprising the organic peroxide is added to the polyethylene powder or to the mixture comprising the polyethylene powder in the mixing device prior or during step c).

In some embodiments, the liquid comprising the organic peroxide is added to the mixture comprising the polyethylene powder in the extruder device at a position where the mixture is not yet molten prior to step e).

In some embodiments, the liquid comprising the organic peroxide is added to the polyethylene powder by passing the liquid with an injection pressure of 0.5 to 4 MPa through a spring injector comprising a preloaded spring.

In some embodiments, the liquid comprising the organic peroxide is a peroxide solution having a content of active oxygen in the range from 0.1 wt.% to 10 wt.%.

In some embodiments, the mixing of step c) is carried out in an atmosphere of reduced oxygen content and the oxygen content in the gas phase within the mixing device is less than 5 vol%.

In some embodiments, the introduction of the mixture comprising the polyethylene powder and the additives into the extruder device occurs in an atmosphere of reduced oxygen content and the oxygen content in the hopper is less than 5 vol%.

In some embodiments, the extruder device is a combination of two co-rotating twin-screw extruders, the mixture comprising the polyethylene powder and the additives is transferred into a first twin-screw extruder, the second twin-screw extruder is provided with a molten polymer stream coming from the first twin-screw extruder, and the second twin-screw extruder completes the homogenization process.

In some embodiments, the extruder device is a counter-rotating continuous mixer equipped with gear pump or a co-rotating twin screw extruder equipped with gear pump.

In some embodiments, the specific energy applied per amount of material being processed in step e) is from 120 kWh/t to 350 kWh/t.

In some embodiments, the molten polyethylene composition is passed through a melt filter before being pelletized.

In some embodiments, the bimodal or multimodal polyethylene has a M_{w}/Mₙ from 15 to 40.

In some embodiments, the polymerization for preparing the bimodal or multimodal polyethylene is carried out in the presence of a polymerization catalyst which is a Ziegler- or Ziegler-Natta-catalyst comprising the reaction product of an aluminum alkyl with a titanium compound supported on a magnesium halide.

In some embodiments, the present disclosure provides a process for preparing a pipe comprising the steps of
a) preparing a polyethylene composition by a process in accordance with one or several of the above-identified embodiments of processes for preparing a polyethylene composition; and
b) forming the polyethylene composition into a pipe.

### BRIEF DESCRIPTION OF THE DRAWINGS

Figure 1 shows schematically a reactor set-up for preparing the bimodal or multimodal polyethylenes employed in the process of the present disclosure.
Figure 2 shows schematically a spring injector for adding a liquid comprising an organic peroxide to a polyethylene powder.
Figure 3 shows schematically a set-up for preparing a polyethylene composition according to the present disclosure in which a liquid comprising an organic peroxide is added to a polyethylene powder in a mixing device.
Figure 4 shows schematically a set-up for preparing a polyethylene composition according to the present disclosure in which a liquid comprising an organic peroxide is added to a polyethylene powder in an extruder device.
Figure 5 shows schematically a comparative set-up for preparing a polyethylene composition in which a solid mixture of an organic peroxide and a polymeric carrier is added to a polyethylene powder in a mixing device.

### DETAILED DESCRIPTION OF THE INVENTION

The present disclosure provides a process for preparing a polyethylene composition comprising bimodal or multimodal polyethylene. The bimodal or multimodal polyethylenes can be obtained by polymerizing ethylene or copolymerizing ethylene and one or more other olefins. Suitable olefins for being copolymerized with ethylene are in particular 1-olefins, i.e. hydrocarbons having terminal double bonds, without being restricted thereto. Suitable olefins can however also be functionalized olefinically unsaturated compounds. Preference is given to linear or branched C₃-C₁₂-1-alkenes, in particular linear C₃-C₁₀-1-alkenes such as propylene, 1-butene, 1-pentene, 1-hexene, 1-heptene, 1-octene, 1-decene or branched C₂-C₁₀-1-alkenes such as 4-methyl-1-pentene or conjugated and nonconjugated dienes such as 1,3-butadiene, 1,4-hexadiene or 1,7-octadiene. It is also possible to copolymerize ethylene with mixtures of two or more 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorborna-diene

The process is suitable for the homopolymerization or copolymerization of ethylene. Preferred comonomers are up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to a process in which ethylene is copolymerized with from 0.1 wt.% to 12 wt.% of 1-hexene and/or 1-butene.

The polyethylenes employed in the process of the present disclosure are bimodal or multimodal polyethylenes. The terms "bimodal" and "multimodal" may refer to the modality of the molecular weight distribution. Such polymers can be obtained from polymerizing ethylene or copolymerizing ethylene and one or more other olefins in a series of two or more polymerization reactors under different reaction conditions or by employing mixed catalyst system comprising two or more types of polymerization catalysts which produce, under the same polymerization conditions, polyethylenes of a different molecular weight. Thus, the "modality" indicates how many different polymerization conditions were utilized in preparing the polyethylene, independently whether this modality of the molecular weight distribution can be recognized as separated maxima in a gel permeation chromatography (GPC) curve or not, or how many different types of polymerization catalysts are comprised in a mixed polymerization catalyst system. Frequently used in the art, and also used herein, the term multimodal can include bimodal. In addition to the molecular weight distribution, the polyethylene can also have a comonomer distribution, wherein preferably the average comonomer content of polymer chains with a higher molecular weight is higher than the average comonomer content of polymer chains with a lower molecular weight. It is however also possible to employ identical or very similar reaction conditions in all polymerization reactors of the series of polymerization reactors and so prepare narrow molecular weight polyethylenes. A complication in producing multimodal polyethylenes in a series of polymerization reactors operating at different reaction conditions is however that, caused by different residence times of individual polyethylene particles in the different reactor, the composition of the individual polyethylene particles of a polyethylene powder may vary strongly.

All industrially known polymerization methods may be used for preparing the bimodal or multimodal polyethylenes. These polymerization methods include solution processes, suspension processes, and gas-phase processes. The polymerization can be carried out batchwise or preferably continuously in two or more stages. Processes of this type are generally known to those skilled in the art. Among the polymerization processes mentioned, gas-phase polymerization, in particular in gas-phase fluidized-bed reactors or multi-zone circulating gas-phase reactors and suspension polymerization, in particular in loop reactors or stirred tank reactors are preferred.

The polymerizations for preparing the bimodal or multimodal polyethylenes may be operated at pressures of from 0.5 MPa to 10 MPa, preferably from 1.0 MPa to 8 MPa and in particular from 1.5 MPa to 4 MPa, wherein these pressures, as all pressures given in the present disclosure, have to be understood as being absolute pressures, i.e. pressure having the dimension MPa (abs). The polymerizations are preferably carried out at temperatures of from 30°C to 160°C, particularly preferably from 65°C to 125°C, with temperatures in the upper part of this range being preferred for preparing ethylene polymers of relatively high density and temperatures in the lower part of this range being preferred for preparing ethylene copolymers of lower density.

In a preferred embodiment of the present disclosure, the polyethylene composition comprises bimodal or multimodal polyethylenes which have been prepared in gas-phase. Preferably, the bimodal or multimodal polyethylenes are prepared in a multi-zone circulating gas-phase reactor; or the bimodal or multimodal polyethylenes are prepared in a series of two or more gas-phase polymerization reactors, preferably a series of two or more fluidized-bed reactors or a series comprising a multi-zone circulating gas-phase reactor and one or more different gas-phase polymerization reactors, such as fluidized-bed reactors; or the bimodal or multimodal polyethylenes are prepared in a series of first one or more suspension polymerization reactors, such as loop reactors, and subsequently one or more gas-phase polymerization reactors, such as fluidized-bed reactors.

Preferably, the apparatus for preparing the bimodal or multimodal polyethylenes comprises a gas-phase polymerization reactor comprising a riser unit, in which growing polymer particles flow upwards under fluidization, fast fluidization or transport conditions, and a downcomer, in which growing polymer particles flow downward in a densified form.

The riser unit, in which the growing polymer particles flow upwards, may comprises a fluidized bed of growing polymer particles. The riser unit then operates as thoroughly mixed gas-phase reactor such as a fluidized bed reactor. Fluidized-bed reactors are reactors in which the polymerization takes place in a bed of polymer particles which is maintained in a fluidized state by feeding in a reaction gas mixture at the lower end of a reactor, usually below a gas distribution grid having the function of dispensing the gas flow, and taking off the gas again at its upper end. The reaction gas mixture is then returned to the lower end to the reactor via a recycle line equipped with a compressor and a heat exchanger for removing the heat of polymerization. The velocity of the reaction gas mixture has to be sufficiently high firstly to fluidize the mixed bed of finely divided polymer present in the tube serving as polymerization zone and secondly to remove the heat of polymerization effectively.

When a polymerization unit comprising a fluidized bed of growing polymer particles is employed as the riser unit, the downcomer may be positioned within, around or adjacent to the gas-phase reactor. It is also possible to employ two or more separated polymerization units, in which the growing polymer particles flow downward in a densified form, as the downcomer.

In an especially preferred embodiment of the present disclosure, the riser unit is a riser, in which an upward movement of growing polymer particles occurs under fast fluidization or transport conditions. Fast fluidization conditions inside the riser are established by feeding a reaction gas mixture at a velocity higher than the transport velocity of the polymer particles. The velocity of the reaction gas mixture is generally comprised between 0.5 and 15 m/s, preferably between 0.8 and 5 m/s. The terms "transport velocity" and "fast fluidization conditions" are well known in the art. For a definition of those terms see, for example, "D. Geldart, Gas Fluidization Technology, page 155 et seq., J. Wiley & Sons Ltd., 1986".

The part of the polymerization reactor in which the growing polymer particles flow downward in a densified form may be called a "downcomer" but may also be designated as a "moving bed" or a "settled bed" unit or reactor. The term "densified form" has to be understood in that the ratio between the mass of polymer and the reactor volume is higher than 80% of the "poured bulk density" of the resulting polymer. Thus, for instance, in the case of a polymer bulk density equal to 420 kg/m³, a "densified form" implies that the polymer mass/reactor volume ratio is at least 336 kg/m³. The "poured bulk density" of a polymer is a parameter well known to the person skilled in the art: it can be measured according to DIN EN ISO 60 : 1999. The density of solid inside the reactor is defined as the mass of polymer per volume of reactor occupied by the polymer.

Typically, a downcomer is a part of the polymerization reactor containing a bed of growing polymer particles, which moves downwards in a substantially plug flow mode. By "plug flow mode", it is meant that there is little or preferably no backmixing of the polymer particles.

For replacing reacted monomers and for controlling the gas flow within the downcomer, gaseous or liquid feed streams may be introduced at one or more positions into the downcomer. The feed streams preferably comprise ethylene and may further comprise one or more comonomers, inert components such as propane, or hydrogen. Depending on the amounts of added gaseous or liquid feed streams to the downcomer and the pressure conditions within the downcomer, the gaseous medium surrounding the polymer particles can be designed to move downwards concurrently with the polymer particles or upward countercurrently to the polymer particles. When feeding liquid streams to the downcomer, these liquid streams preferably vaporize within the downcomer, contributing to the composition of the reaction gas mixture within the downcomer. When operating the downcomer with more than one feed stream, the feeding points for introducing the feed streams into the downcomer are preferably evenly distributed over the height of the downcomer.

In a most preferred embodiment of the present disclosure, the gas-phase polymerization reactor is a multizone circulating reactor. Such reactors are, for example, described in WO 97/04015 A1 and WO 00/02929 A1 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. In such polymerization reactors, a solid/gas separator is arranged above the downcomer to separate the polyethylene and reaction gaseous mixture coming from the riser. The growing polyethylene particles enter the downcomer and the separated reaction gas mixture of the riser is continuously recycled through a gas recycle line to one or more points of reintroduction into the polymerization reactor. Preferably, the major part of the recycle gas is recycled to the bottom of the riser. The recycle line is preferably equipped with a compressor and a heat exchanger for removing the heat of polymerization. Preferably, a line for the catalyst feed is arranged on the riser and a polymer discharge system is located in the bottom portion of the downcomer. The introduction of make-up monomers, comonomers, hydrogen and/or inert components may occur at various points along the riser and the downcomer.

According to a preferred embodiment of the present disclosure, the reaction gas mixture leaving the riser unit is partially or totally prevented from entering the downcomer for establishing different polymerization conditions between the riser unit and at least a part of the downcomer. This can for example be achieved by feeding a barrier fluid in form of a gas and/or liquid mixture into the downcomer, preferably in the upper part of the downcomer. The barrier fluid should have a suitable composition, different from that of the gas mixture present in the riser unit. The amount of added barrier fluid can be adjusted in a way that an upward flow of gas countercurrent to the flow of the polymer particles is generated, particularly at the top thereof, acting as a barrier to the gas mixture entrained with the particles coming from the riser unit.

The barrier fluid preferably comes from a recycle gas stream and is more preferably obtained by partly condensing the stream. As a consequence, the barrier fluid may contain, besides the monomers to be polymerized, also inert compounds used as a polymerization diluent like nitrogen or alkanes having from 1 to 10 carbon atoms, hydrogen or other components of the reaction gas mixture.

The polymerization in the gas-phase polymerization reactor can also be carried out in a condensing or super-condensing mode, in which part of the circulating reaction gas mixture is cooled to below the dew point and returned to the reactor separately as a liquid and a gas-phase or together as a two-phase mixture in order to make additional use of the enthalpy of vaporization for cooling the reaction gas.

In a preferred embodiment of the present disclosure, the gas-phase polymerization reactor comprising the riser unit and the downcomer is part of a series of polymerization reactors. The further polymerization reactors of the series of polymerization reactors can be any kind of low-pressure polymerization reactors such as gas-phase reactors or suspension reactors. If the polymerization process of the series of polymerization reactors includes a polymerization in suspension, the suspension polymerization is preferably carried out upstream of the gas-phase polymerization. Suitable reactors for carrying out such a suspension polymerization are for example loop reactors or stirred tank reactors. Suitable suspension media are inter alia inert hydrocarbons such as isobutane or mixtures of hydrocarbons or else the monomers themselves. Such additional polymerization stages, which are carried out in suspension, may also include a pre-polymerization stage. If the multistage polymerization comprises additional polymerization stages carried out in gas-phase, the additional gas-phase polymerization reactors can be any type of gas-phase reactors like horizontally or vertically stirred gas-phase reactors, fluidized-bed reactors or multizone circulating reactors. Such additional gas-phase polymerization reactors may be arranged downstream or upstream of the gas-phase polymerization reactor. In an especially preferred embodiment of the present disclosure, the gas-phase polymerization reactor comprising the riser unit and the downcomer is part of a series of polymerization reactors in which a fluidized-bed polymerization reactor is arranged upstream of the gas-phase polymerization reactor.

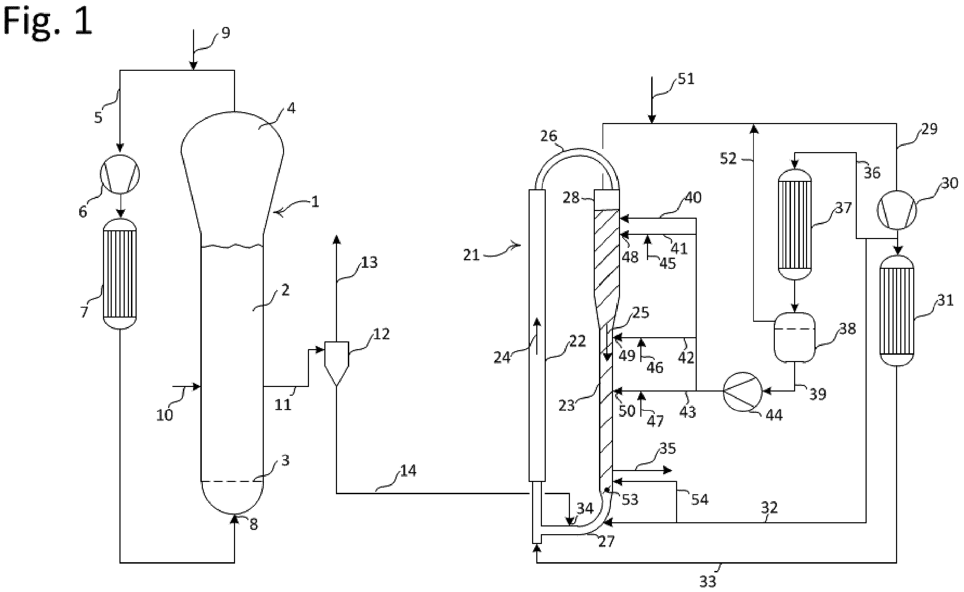

Figure 1 shows schematically a set-up of a series of polymerization reactors comprising a fluidized-bed reactor and a multizone circulating reactor for preparing the bimodal or multimodal polyethylenes employed in the process of the present disclosure.

The first gas-phase reactor, fluidized-bed reactor (1), comprises a fluidized bed (2) of polyethylene particles, a gas distribution grid (3) and a velocity reduction zone (4). The velocity reduction zone (4) is generally of increased diameter compared to the diameter of the fluidized-bed portion of the reactor. The polyethylene bed is kept in a fluidization state by an upward flow of gas fed through the gas distribution grid (3) placed at the bottom portion of the reactor (1). The gaseous stream of the reaction gas mixture leaving the top of the velocity reduction zone (4) via recycle line (5) is compressed by compressor (6), transferred to a heat exchanger (7), in which it is cooled, and then recycled to the bottom of the fluidized-bed reactor (1) at a point below the gas distribution grid (3) at position (8). The recycle gas can, if appropriate, be cooled to below the dew point of one or more of the recycle gas components in the heat exchanger so as to operate the reactor with condensed material, i.e. in the condensing mode. The recycle gas can comprise, besides unreacted monomers, inert condensable gases, such as alkanes, as well as inert non-condensable gases, such as nitrogen. Make-up monomers, hydrogen, and optional inert gases or process additives can be fed into the reactor (1) at various positions, for example via line (9) upstream of the compressor (6). Generally, the catalyst is fed into the reactor (1) via a line (10) that is preferably placed in the lower part of the fluidized bed (2).

The polyethylene particles obtained in fluidized-bed reactor (1) are discontinuously discharged via line (11) and fed to a solid/gas separator (12) in order to avoid that the gaseous mixture coming from the fluidized-bed reactor (1) enters the second gas-phase reactor. The gas leaving solid/gas separator (12) exits the reactor via line (13) as off-gas while the separated polyethylene particles are fed via line (14) to the second gas-phase reactor.

The second gas-phase reactor is a multizone circulating reactor (21) comprising a riser (22) and a downcomer (23) which are repeatedly passed by the polyethylene particles. Within riser (22), the polyethylene particles flow upward under fast fluidization conditions along the direction of arrow (24). Within the downcomer (23) the polyethylene particles flow downward under the action of gravity along the direction of the arrow (25). The riser (22) and the downcomer (23) are appropriately interconnected by the interconnection bends (26) and (27).

After flowing through the riser (22), the polyethylene particles and the reaction gas mixture leave riser (22) and are conveyed to a solid/gas separation zone (28). This solid/gas separation can be effected by using conventional separation means such as, for example, a centrifugal separator like a cyclone. From the separation zone (28) the polyethylene particles enter downcomer (23).

The reaction gas mixture leaving the separation zone (28) is recycled to the riser (22) by means of a recycle line (29), equipped with a compressor (30) and a heat exchanger (31). Between the compressor (30) and the heat exchanger (31), the recycle line (29) splits and the gaseous mixture is divided into two separated streams: line (32) conveys a part of the recycle gas into the interconnection bend (27), while line (33) conveys another part the recycle gas to the bottom of riser (22), so as to establish fast fluidization conditions therein.

The polyethylene particles coming from the first gas-phase reactor via line (14) enter the multizone circulating reactor (21) at the interconnection bend (27) in position (34). The polyethylene particles obtained in multizone circulating reactor (21) are continuously discharged from the bottom part of downcomer (23) via the discharge line (35).

A part of the gaseous mixture leaving the separation zone (28) exits the recycle line (29) after having passed the compressor (30) and is sent through line (36) to the heat exchanger (37), where it is cooled to a temperature at which the monomers and the optional inert gas are partially condensed. A separating vessel (38) is placed downstream of the heat exchanger (37). The separated liquid is withdrawn from the separating vessel (38) via line (39) and fed to downcomer (23) through lines (40), (41), (42) and (43) by means of a pump (44), wherein the feed stream introduced via line (40) is supplied to generate the barrier for preventing the reaction gas mixture of the riser (22) from entering the downcomer (23). Make-up monomers, make-up comonomers, and optionally inert gases and/or process additives can be introduced via lines (45), (46) and (47) into lines (41), (42) and (43) and then fed into the downcomer (23) at monomer feeding points (48), (49) and (50). Make-up monomers, make-up comonomers, and optionally inert gases and/or process additives can further be introduced into the recycle line (29) via line (51). The gaseous mixture obtained as gas-phase in the separating vessel (38) is recirculated to recycle line (29) through line (52).

The bottom of the downcomer (23) is equipped with a control valve (53) having an adjustable opening for adjusting the flow of polyethylene particles from downcomer (23) through the interconnection bend (27) into the riser (22). Above the control valve (53), amounts of a recycle gas mixture coming from the recycle line (29) through line (54) are introduced into the downcomer (23) to facilitate the flow of the polyethylene particles through the control valve (53).

The polymerization for preparing the bimodal or multimodal polyethylenes of the present disclosure can be carried out using all customary ethylene polymerization catalysts. That means the polymerization can be carried out, for example, using Phillips catalysts based on chromium oxide, using titanium-based Ziegler- or Ziegler-Natta-catalysts, using single-site catalysts, or using mixtures of such catalysts. The preparation and use of these catalysts for ethylene polymerization are generally known. In a preferred embodiment of the present disclosure, the polymerization catalyst is a Ziegler- or Ziegler-Natta-catalyst comprising the reaction product of an aluminum alkyl with a titanium compound supported on a magnesium halide.

The bimodal or multimodal polyethylenes employed in the process of the present disclosure have been obtained in the polymerization in form of a polyethylene powder, that means in form of relatively small particles. The mass-median-diameter D50 of these polyethylene particles is preferably in the range from 300 µm to 2500 µm, more preferably from 400 µm to 2300 µm, and in particular from 800 µm to 2100 µm, determined by dry sieving analysis according to DIN 53477 (November 1992).

The bimodal or multimodal polyethylenes employed in the process of the present disclosure have a density from 0.940 to 0.968 g/cm³. Preferably, the density is in the range from 0.945 to 0.965 g/cm³ of and in particular in the range of from 0.945 to 0.955 g/cm³. The density has to be understood as being the density determined according to DIN EN ISO 1183-1:2004, Method A (Immersion) with compression molded plaques of 2 mm thickness which were pressed at 180°C, 20 MPa for 8 minutes with subsequent crystallization in boiling water for 30 minutes.

Preferably, the bimodal or multimodal polyethylenes for being employed in the process of the present disclosure have a melt flow rate MFR_{21.6} at 190°C under a load of 21.6 kg, determined according to DIN EN ISO 1133:2005 condition G, from 0.5 to 300 g/10 min, more preferably from 1 to 100 g/10 min, even more preferably from 1.2 to 100 g/10 min and in particular from 1.5 to 50 g/10 min.

Preferably, the bimodal or multimodal polyethylene has a M_{w}/Mₙ from 15 to 40, in particular from 20 to 35, where M_{w} is the weight average molecular weight and Mₙ is the number average molecular weight, measured by GPC (Gel Permeation Chromatography). The GPC is preferably a high-temperature gel permeation chromatography carried out as described in ISO 16014-1, -2, -4, issues of 2003 in which 1 ,2,4-trichlorobenzene (TCB) is used as solvent, the temperature of apparatus and solutions are 135°C and an infrared detector capable for use with TCB is employed as a concentration detector.

The polyethylene compositions of the present disclosure are prepared in an extruder device. Suitable extruder devices for the process of the present disclosure are extruders or continuous mixers. These extruders or mixers can be single- or two-stage machines which melt and homogenize the polyethylene composition. Examples of extruders are pin-type extruders, planetary extruders or co-rotating disk processors. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter-rotating twin rotor or the extruder device comprises at least one co-rotating twin screw extruder. Machinery of this type is conventional in the plastics industry and is manufactured by, for example, Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Suitable extruder devices are further usually equipped with units for pelletizing the melt, such as underwater pelletizers.

In especially preferred embodiments of the present disclosure, the extruder device is a combination of two co-rotating twin-screw extruders in which the mixture comprising the polyethylene powder and the additives is transferred into a first twin-screw extruder, the second twin-screw extruder is provided with a molten polymer stream coming from the first twin-screw extruder and the second twin-screw extruder completes the homogenization process. In other especially preferred embodiments of the present disclosure, the polyethylene compositions are prepared in a counter-rotating continuous mixer equipped with gear pump or in a co-rotating twin screw extruder equipped with gear pump.

In the process for preparing the polyethylene compositions according to the present disclosure, as step a), a bimodal or multimodal polyethylene is supplied in form of a polyethylene powder to a mixing device. The mixing device can be any apparatus which allows dry-blending of particles. The mixing device can operate continuously or discontinuously. Preferably, the mixing device operates continuously.

Preferred dry-blending devices are paddle mixers comprising one or two horizontally orientated rotating shafts, more preferably two horizontally orientated counter-rotating shafts. The shafts are equipped with paddles of an appropriate geometry. The rotating shafts move the composition of polyethylene powder and additives horizontally along the axis of the shafts and at the same time mix the composition intensively. Such paddle mixers are commercially available, for example, from Köllemann GmbH, Adenau, Germany or J. Engelsmann AG, Ludwigshafen, Germany. Preferred mixing devices are further vertical batch mixer such a Henschel-Mixers^{®} available from Zeppelin Systems GmbH, Kassel, Germany. Preferred dry-blending devices are also single screw conveyors equipped with blending elements. Preferably, such blending elements are amendable devices such as adjustable paddles or slotted flights to allow controlling the level of blending.

In step b) of the process of the present disclosure, one or more additives which are not organic peroxides are supplied to the mixing device. Such additives are common in the art. Especially for multimodal polyethylenes it is however essential that the additives are very uniformly distributed within the polyethylene. Suitable types of additives for preparing polyethylene compositions are, for example, antioxidants, melt stabilizers, light stabilizers, acid scavengers, lubricants, processing aids, antiblocking agents, slip agents, antistatics agents, antifogging agents, pigments or dyes, nucleating agents, flame retardants or fillers. It is common that several additives are added to the polyethylene compositions. The multiple additives can be different types of additives. It is however also possible that several representatives of one type of additives are added to one polyethylene composition. Additives of all these types are generally commercially available and are described, for example, in Hans Zweifel, Plastics Additives Handbook, 5th Edition, Munich, 2001.

Step c) of the process of the present disclosure provides mixing the polyethylene powder and the additives at a temperature in the range from 10°C to 100°C without melting the polyethylene powder. Preferably, the mixing of step c) is carried out at a temperature in the range from 20°C to 90°C, more preferably from 60°C to 80°C.

In a preferred embodiment of the present disclosure, the mixing of step c) is carried out in an atmosphere of reduced oxygen content which is preferably achieved by injecting nitrogen into the mixing device. Preferably, the oxygen content in the gas phase within the mixing device is less than 5 vol%, more preferably less than 1 vol% and in particular less than 0.2 vol%.

The mixture comprising the polyethylene powder and the additives is then transferred in step d) from the mixing device into the extruder device. Preferably, the mixture comprising the polyethylene powder and the additives is transferred to a hopper of the extruder device and then introduced from the hopper into the extruder device. Preferably, the transfer of the mixture comprising the polyethylene powder and the additives into the extruder device occurs by gravity. Preferably, the introduction of the mixture comprising the polyethylene powder and the additives into the extruder device occurs in an atmosphere of reduced oxygen content which is preferably achieved by injecting nitrogen into the hopper. Preferably, the oxygen content in the gas phase within the hopper is less than 5 vol%, more preferably less than 1 vol% and in particular less than 0.2 vol%.

Within the extruder device, in step e), the mixture comprising the polyethylene powder and the additives is melted and homogenized to form a molten polyethylene composition. This occurs preferably by applying heat and mechanical energy to the mixture of polyethylene powder and additives. Preferably, the specific energy, i.e. the combined amount of heat and mechanical energy applied per amount of material being processed, is from 120 kWh/t to 350 kWh/t, more preferably from 160 kWh/t to 300 kWh/t, and in particular from 200 kWh/t to 260 kWh/t.

Step e) results in a homogenization of the polyethylene melt as such and also provides a uniform distribution of the additives within the polyethylene melt.

In preferred embodiment of the present disclosure, the molten polyethylene composition is passed through a melt filter before being pelletized. Suitable melt filters comprise one or more active screens having a mesh opening from 50 µm to 400 µm. Especially preferred melt filters are melt filters which comprise one or more active screens having a mesh opening from 75 µm to 200 µm or melt filters which comprises at least two screens having a mesh opening from 205 µm to 350 µm. Such combinations of screens are, for example, described in WO 2012/152775 A1.

Subsequent step f) of the process of the present disclosure provides pelletizing the molten polyethylene composition comprising the bimodal or multimodal polyethylene and the additives. Step f) accordingly transforms the molten polyethylene composition into pellets.

According to the process of the present disclosure, a liquid comprising an organic peroxide is added to the polyethylene powder. The liquid comprising an organic peroxide can be a liquid peroxide or the liquid comprising an organic peroxide can be a solution of a peroxide. Preferably, the liquid comprising an organic peroxide is a solution of a peroxide. The liquid comprising an organic peroxide is added to the polyethylene powder in an amount of from 20 ppm to 200 ppm, preferably from 40 ppm to 150 ppm, and in particular from 45 ppm to 95 ppm of organic peroxide with respect to the polyethylene powder. Examples of suitable organic peroxides are dicumyl peroxide, di-tert-butyl peroxide, tert-butylperoxybenzoate, 2,5-dimethyl-2,5-di(tert-bu-tylperoxy)hexane, 3,6,9-triethyl-3,6,9-trimethyl-1 ,2,4,5,7,8-hexoxonane, representatives of 3,6,9-trimethyl-3,6,9-tris(alkyl)-1,2,4,5,7,8-hexoxonanes in which the alkyl radical is propyl or ethyl, tert-butyl peroxyneodecanoate, tert-amyl peroxypivalate, 1,3-bis(tert-butylperoxyisopropyl)benzene, and the like. Preferably, the organic peroxide is 2,5-dimethyl-2,5-di(tert-butylperoxy)hexane, 3,6,9-triethyl-3,6,9-trimethyl-1 ,2,4,5,7,8-hexoxonane, or a representative of 3,6,9-trimethyl-3,6,9-tris(alkyl)-1 ,2,4,5,7,8-hexoxonanes in which the alkyl radical is propyl or ethyl.

In preferred embodiments of the present disclosure, the organic peroxide is employed in form of a solution in a diluent like a hydrocarbon to a polyethylene powder. Preferred peroxide solutions have a content of active oxygen in the range from 0.1 wt.% to 10 wt.%, preferably from 0.2 wt.% to 5 wt.%, more preferably from 0.3 wt.% to 2 wt.%, and in particular from 0.5 wt.% to 1 wt.%.

In the process of the present disclosure, the liquid comprising the organic peroxide is added to the polyethylene powder or to a mixture comprising the polyethylene powder at a position where mixing occurs and where the polyethylene powder has a temperature of from 10°C to 100°C, preferably from 20°C to 90°C and more preferably from 60°C to 80°C.

In a preferred embodiment of the present disclosure, the liquid comprising the organic peroxide is added to the polyethylene powder or to a mixture comprising the polyethylene powder in the mixing device prior or during step c). In this embodiment, the liquid comprising the organic peroxide can be added to the polyethylene powder before adding other additives, after adding other additives, or together with adding other additives. Preferably, the liquid comprising the organic peroxide is added to the polyethylene powder after adding other additives, i.e. the liquid comprising the organic peroxide is added to a mixture comprising the polyethylene powder and other additives.

In another preferred embodiment of the present disclosure, the liquid comprising the organic peroxide is added to the mixture comprising the polyethylene powder and the additives in the extruder device at a position where the mixture is not yet molten prior to step e).

In preferred embodiments of the present disclosure, the liquid comprising the organic peroxide is added to the polyethylene powder by passing the liquid with an injection pressure of from 0.5 to 4 MPa, more preferably from 1 to 2 MPa, through a spring injector comprising a preloaded spring.

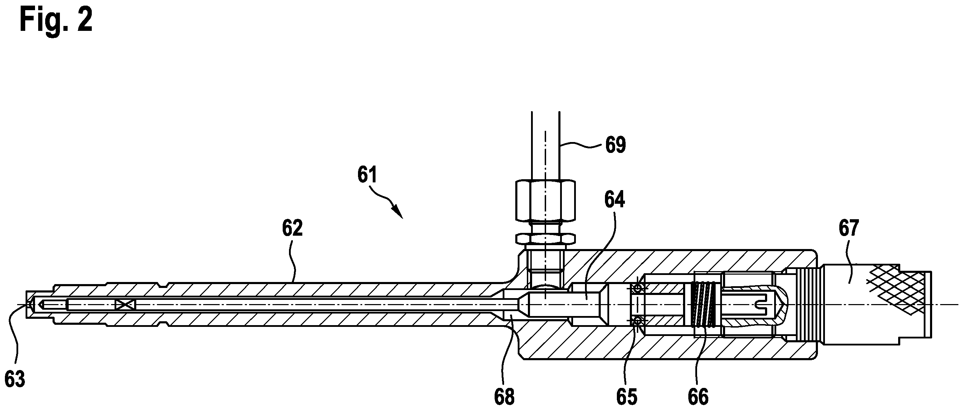

Figure 2 shows schematically such a spring injector for adding a liquid comprising an organic peroxide to a polyethylene powder. The spring injector (61) is composed of a body (62) including an injection orifice (63), an internal needle (64), a sealing device (65), an compression spring (66), and a compression adjustment knob (67) used to set the spring preload and contains an injection chamber (68). A liquid comprising an organic peroxide is continuously fed through feeding pipe (69) into the injection chamber (68). Compression spring (66) pushes the needle (64) against the injection orifice (63) according to the preload of compression spring (66). Once the pressure within the injection chamber (68) overcomes the preload on the compression spring (66), the peroxide solution is finely sprayed over the polyethylene powder. Additionally, the preload of the compression spring (66) prevents that powdery material, such as polyethylene fines or additives may enter into the injection chamber (68) causing potential blockings.

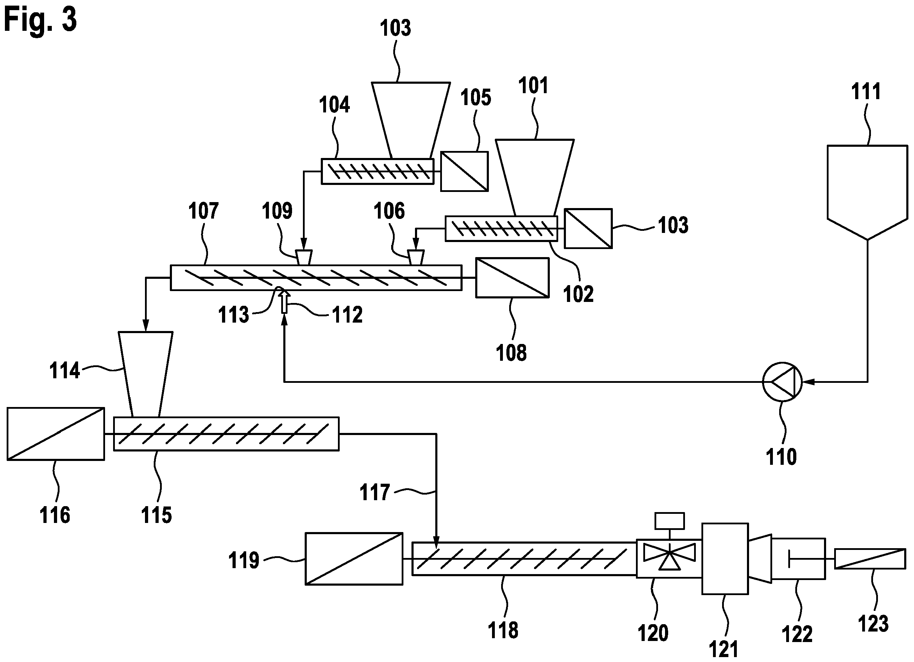

Figure 3 shows schematically a set-up for preparing a polyethylene composition according to the present disclosure in which a liquid comprising an organic peroxide is added to a polyethylene powder in a mixing device.

Polyethylene powder is provided to hopper (101) of a dosing device (102) being operated by a motor (103). A mixture of additives is provided to hopper (103) of a second dosing device (104) being operated by a motor (105). Dosing device (102) feeds the polyethylene powder to a hopper (106) of a screw conveyor (107) being operated by a motor (108). Dosing device (104) feeds the mixture of additives to a hopper (109) of screw conveyor (107) which is located downstream of hopper (106). A peroxide solution is transferred by a pump (110) from a storage vessel (111) to the screw conveyor (107) and injected through injector (112) into the screw conveyor (107) at a position (113) downstream of hopper (109).

Screw conveyor (107) feeds the mixture of polyethylene powder, additives and peroxide solution to a hopper (114) of a first extruder (115) being operated by a motor (116). Within extruder (115), the mixture of polyethylene powder, additives and peroxide solution is melted and homogenized.

Extruder (115) feeds the molten mixture of polyethylene powder, additives and peroxide solution via a line (117) into a second extruder (118) being operated by a motor (119). Within extruder (118), the homogenization of the molten mixture of polyethylene powder, additives and peroxide solution process is completed. The homogenized melt is passed through a startup valve (120) and a melt filter (121) and transferred into an underwater pelletizer (122) operated by a motor (123) for forming pellets.

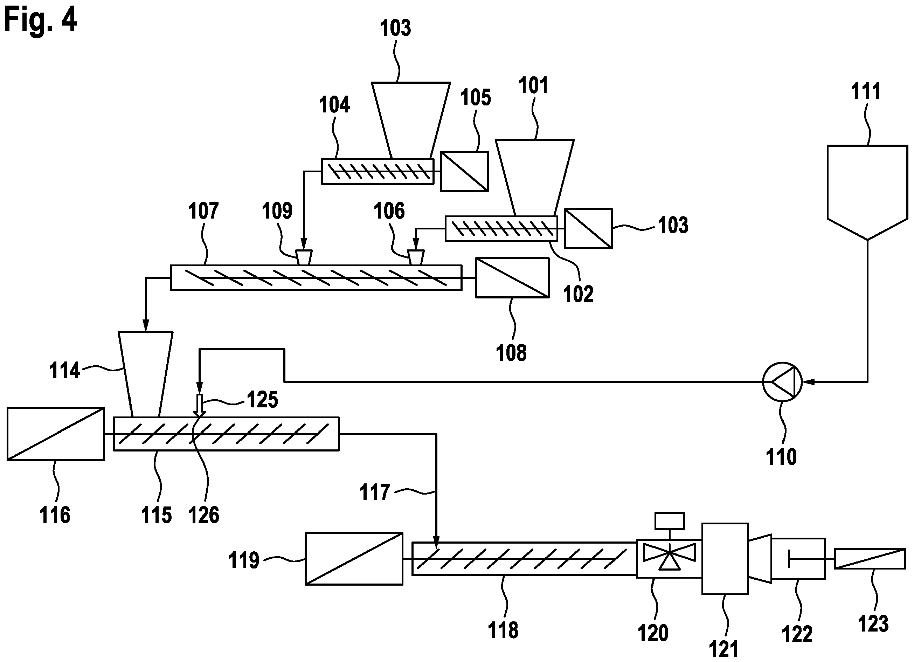

Figure 4 shows schematically a set-up for preparing a polyethylene composition according to the present disclosure in which a liquid comprising an organic peroxide is added to a polyethylene powder in an extruder device.

The set-up for preparing a polyethylene composition shown in Figure 4 is identical with the set-up for preparing a polyethylene composition shown in Figure 4 except that the peroxide solution is transferred by pump (110) from storage vessel (111) to the first extruder (115) and injected through injector (125) into extruder (115) at a position (126) downstream of hopper (114) where the polyethylene powder is not yet molten.

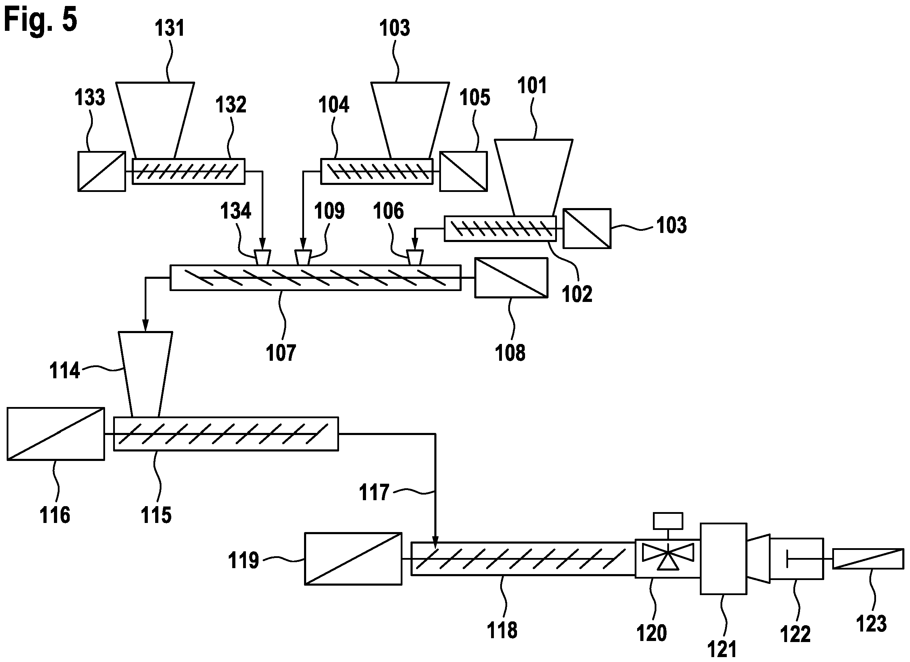

Figure 5 shows schematically a comparative set-up for preparing a polyethylene composition in which a solid mixture of an organic peroxide and a polymeric carrier is added to a polyethylene powder in a mixing device.

The set-up for preparing a polyethylene composition shown in Figure 5 is identical with the set-up for preparing a polyethylene composition shown in Figure 4 except that no peroxide solution is provided to the screw conveyor (107). Instead, an organic peroxide on a polymeric carrier is provided to hopper (131) of dosing device (132) being operated by a motor (133) and dosing device (132) feeds the organic peroxide on the polymeric carrier to a hopper (134) of screw conveyor (107) which is located downstream of hopper (109).

The process of the present disclosure allows preparing polyethylene compositions comprising bimodal or multimodal polyethylene from polyethylene powders having a mass-median-diameter D50 of the polyethylene particles in the range from 400 µm to 2500 µm which have a superior combination of properties, including a good bubble stability and a low amount of gels when preparing blown films. Furthermore, the process can be carried out continuously in an economical manner.

In another aspect, the present disclosure provides process for preparing a pipe comprising the steps of a) preparing a polyethylene composition by a process according to the present disclosure and b) forming the polyethylene composition into a pipe. The pipe is preferably a pipe having a SAG value of from 10 to 17.

### EXAMPLES

The melt flow rate MFRs was determined according to DIN EN ISO 1133-1:2012-03 at a temperature of 190 °C under a load of 5 kg.

The SAG values were determined in a rotational parallel plate rheometer with a shear stress of 300 Pa for 5200 seconds at 230°C with plate opening of 1 mm. The SAG values are defined as 1/10^{th} of a percent of creep strain measured at the end of the test. Lower SAG values correspond to a more uniform pipe thickness.

The gel count and gel area were determined by preparing a cast film, analyzing the film defects by means of an optical scanning device and classifying and counting the film defects according to their size (circle diameter). The films were prepared by an extruder (type Collin 25) equipped with a chill roll and winder (model Collin Chill Roll 144/230), and analyzed by an optical film surface analyzer with flash camera system, model FSA100 (produced by OCS Optical Control Systems GmbH, Witten, Germany). The apparatus had the following characteristics
- screw diameter: 25 mm;
- screw length: 25 D;
- compression ratio: 3.5:1;
- screw layout 27 D: 9 D feeding, 7 D compression, 9 D metering;
- die width (slit die): 150 mm;
- resolution: 25 µm x 25 µm;
and was operated under the following conditions
- T 1 200°C;
- T 2 210°C;
- T 3 220°C;
- T 4,5 (adapter) 230°C ;
- T 6,7,8 (die) 240°C;
- take off speed 3.0 m/min;
- screw speed to be adjusted to film thickness 50 µm;
- throughput 1.0 to 1.5 kg/h (target 1.15 kg/h);
- air shower ON,
- chill roll temperature 60°C;
- camera threshold threshold 1: 50% - threshold 2: 45%.
For starting the measurement, extruder and take off unit were set to the specified conditions and started with a material having a known gel level. The film inspection software was started when the extruder showed steady conditions of temperature and melt pressure. After having operated the extruder with the starting material for at least half an hour or after the gel count having reached the known gel level, the first sample to measure was fed to the extruder. After having reached a stable gel level for 45 minutes the counting process was started until the camera had inspected an area of at least 3 m² of film. Thereafter the next sample was fed to the extruder and after having reached again a stable gel count for 45 minutes the counting process for the next sample was started. The counting process was set for all samples in a way that the camera inspected an area of at least 3 m² of film and the number of measured defects per size-class was normalized to 1 m² of film.

The determination of the particle size distribution of the produced polyethylene powder was carried out by dry sieving analysis according to DIN 53477 (November 1992) using a AS 200 control vibratory sieve shaker (Retsch GmbH, Haan, Germany) with a set of 7 calibrated sieves (125 µm, 250 µm, 500 µm, 710 µm, 1000 µm, 1400 µm, and 2000 µm). The mass-median-diameter D50 of the polyethylene particles was obtained by calculating the particle size distribution using the software Easy Sieve 4.0 of the apparatus, after weighting the fractions on each sieve.

### Example 1

A polyethylene was prepared in a series of a fluidized-bed reactor and a multizone circulating reactor (MZCR) having two interconnected reaction zones as shown in Figure 1.

12 g/h of a Ziegler-Natta catalyst, which was prepared according to Example 6 of WO2018/114453 A1, were fed using 0.7 kg/h of liquid propane to a first stirred precontacting vessel, into which additionally triisobutylaluminum (TIBA) and diethylaluminum chloride (DEAC) were dosed. The weight ratio of TIBA to DEAC was 7:1. The weight ratio of the aluminum alkyls to the catalyst solid was 5:1. The first precontacting vessel was kept at 50°C with a residence time of 30 minutes. The catalyst suspension of the first precontacting vessel was continuously transferred to a second stirred precontacting vessel, which was operated with a residence time of 30 minutes and kept at 50°C. The catalyst suspension was then transferred continuously to a fluidized-bed reactor (1) via line (10).

In the fluidized-bed reactor (1), ethylene was polymerized in the presence of propane as an inert diluent using hydrogen as molecular weight regulator. 50 kg/h of ethylene and 230 g/h of hydrogen were fed to the fluidized-bed reactor (1) via line (9). No comonomer was added. The polymerization was carried out at a temperature of 80°C and a pressure of 2.9 MPa.

The polyethylene obtained in the fluidized-bed reactor (1) had an MFR_{2.16} of 80 g/10 min and a density of 0.967 g/cm³.

The polyethylene obtained in the fluidized-bed reactor (1) was continuously transferred to a multizone circulating reactor (21), which was operated at a pressure of 2.5 MPa and a temperature of 80°C measured at the beginning of line (29) where the reaction gas mixture has just left separation zone (28). The riser (22) had an internal diameter of 200 mm and a length of 19 m. The downcomer (23) had a total length of 18 m, divided into an upper part of 5 m with an internal diameter of 300 mm, a lower part of 13 m with an internal diameter of 150 mm and in-between the upper part and the lower part a conical part having a length of 0.43 m. The final polymer was discontinuously discharged via line (35).

50 kg/h of a liquid stream were fed as barrier fluid into the upper part of the downcomer (23) via line (40). The liquid for generating the barrier originated from partially condensing recycle gas mixture in heat exchanger (37) at working conditions of 60°C and 2.5 MPa and separating liquid and gaseous components in separating vessel (38). The liquid barrier fluid had a composition that the gas produced by vaporizing the barrier fluid had 4.2 vol.% ethylene, 0.02 vol.% hydrogen, 0.6 vol.% 1-hexene and 95.18 vol.% propane.

Additional monomers were fed to the downcomer at three monomer feeding points below the barrier. The combined quantity of fresh monomers fed into the downcomer (23) were 20 kg/h of ethylene and 1.7 kg/h of 1-hexene. Additionally, 5 kg/h of propane, 25.5 kg/h of ethylene and 1.3 g/h of hydrogen were fed through line (51) into the recycle line (29).

Of the polyethylene finally obtained in the series of the fluidized-bed reactor (1) and the multizone circulating reactor (21), 51 % by weight were produced in the fluidized-bed reactor (1) and 49 % by weight were produced in the multizone circulating reactor (21).

The finally obtained polyethylene had an MFRs of 0.21 g/10 min and a density of 0.948 g/cm³. The mass-median-diameter D50 of the polyethylene powder was 1624 µm.

### Example 2

To provide the polyethylene powder obtained in Example 1 with additives, Songnox 1010 (supplied by SONGWON Industrial Co., Ltd., Ulsan, South Korea), Irgafos 168 (supplied by BASF SE, Ludwigshafen, Germany), and Calcium Stearate "M" (supplied by So.G.I.S. Industria Chimica Spa, Sospiro, Italy) were mixed by a Mixaco LAB high speed mixer (MIXACO Maschinenbau, Neuenrade, Germany) to form an homogeneous powder premix. The obtained additive powder premix and the polyethylene powder prepared in Example 1 were metered at two different feeding points as shown in Figure 3 to a screw conveyor provided by Somef Officina Meccanica E Fonderia, Occhiobello, Italia and intimately mixed therein. The feeding rate of the final polyethylene powder obtained in Example 1 to the conveyor screw was 125 kg/h. The amounts of added additives correspond to a content of additives in the final polyethylene composition of 1600 ppm by weight Songnox 1010, 1600 ppm by weight Irgafos 168, 1200 ppm by weight Calcium Stearate M. For preventing the presence of oxygen, nitrogen was injected into the screw conveyor at a feed rate of 0.5 m³/h

An homogeneous solution of 6 wt.% 2,5-dimethyl-2,5-di-(tert.-butylperoxy)-hexane (Peroxan HX supplied by PERGAN GmbH, Bocholt, Germany) and 94 wt.% paraffinic oil OB 22 AT (supplied by Conqord Oil S.R.L., Castellar Guidobono, Italy), resulting in a solution containing 0.606 wt.% of active oxygen, was metered in the screw conveyor as shown in Figure 3 using a liquid injector as shown in Figure 2 provided by Coperion GmbH, Stuttgart, Germany with an injection pressure of 1 MPa. The added amount of the peroxide solution was at 1083 ppm by weight (corresponding to 65 ppm by weight of 2,5-dimethyl-2,5-di-(tert.-butylperoxy)-hexane) with respect to the final polyethylene composition.

The homogenous mix of polyethylene powder, additives and peroxide generated by the screw conveyor mixer was then fed to the feeding hopper of a ZSK NT 50/58 extrusion line (Coperion GmbH, Stuttgart, Germany) comprising a first twin-screw extruder ZSK 50 and a second twin-screw extruder ZSK 58 and was then subjected to melting, homogenization and melt filtering steps and finally pelletized using a Filtec UW50 underwater pelletizing system (Filtec srl, Badia Polesine, Italy). For melt filtering, the melt was passed through a screen pack composed of four 60 mesh metallic nets and a 20 mesh metallic net acting as mechanical support.

The applied operating conditions and the results of the characterizations of the obtained pellet samples are indicated in Table 1.

### Example 3

The process of Example 2 was repeated at the same conditions except that 1333 ppm by weight of the peroxide solution (corresponding to 80 ppm by weight of 2,5-dimethyl-2,5-di-(tert.-butylperoxy)-hexane) were added with respect to the final polyethylene composition.

The applied operating conditions and the results of the characterizations of the obtained pellet samples are indicated in Table 1.

### Example 4

The process of Example 3 was repeated at the same conditions except that no peroxide solution was metered in the screw conveyor and a homogenous mix of polyethylene powder and additives generated by the screw conveyor mixer was fed to the feeding hopper of a ZSK NT 50/58 extrusion line.

The peroxide solution was metered as shown in Figure 4 into the first twin-screw extruder ZSK 50 at a position before the melting of the polymer where the extruder temperature was 80°C, using a liquid injector as shown in Figure 2 provided by Coperion GmbH, Stuttgart, Germany with an injection pressure of 1 MPa. The added amount of the peroxide solution was at 1333 ppm by weight (corresponding to 80 ppm by weight of 2,5-dimethyl-2,5-di-(tert.-butylperoxy)-hexane) with respect to the final polyethylene composition.

The applied operating conditions and the results of the characterizations of the obtained pellet samples are indicated in Table 1.

### Comparative Example A

The process of Example 2 was repeated at the same conditions except that no peroxide was added.

The obtained polyethylene composition had a very low gel level. However, the SAG value was 45. This high SAG value demonstrates that the obtained polyethylene composition was not suited for producing large diameter pipes having acceptable wall thickness variations.

### Comparative Example B

The process of Example 2 was repeated at the same conditions except that no peroxide solution was metered in the screw conveyor. Instead, a 20 wt.% mixture of 2,5-dimethyl-2,5-di-(tert.-butylperoxy)-hexane with polypropylene (PERGAPROP HX-20 PP, supplied by PERGAN GmbH, Bocholt, Germany) was metered in the screw conveyor as shown in Figure 5. The added amount of the peroxide mixture was at 325 ppm by weight (corresponding to 65 ppm by weight of 2,5-dimethyl-2,5-di-(tert.-butylperoxy)-hexane) with respect to the final polyethylene composition. The homogenous mix of polyethylene powder, additives and peroxide mixture generated by the screw conveyor mixer was then fed to the feeding hopper of the ZSK NT 50/58 extrusion line.

The applied operating conditions and the results of the characterizations of the obtained pellet samples are indicated in Table 1.

### Comparative Example C

The process of Comparative Example B was repeated at the same conditions except that 400 ppm by weight of the peroxide mixture (corresponding to 80 ppm by weight of 2,5-dimethyl-2,5-di-(tert.-butylperoxy)-hexane) were added with respect to the final polyethylene composition.

The applied operating conditions and the results of the characterizations of the obtained pellet samples are indicated in Table 1.

**Table 1**

| | Example 2 | Example 3 | Example 4 | Comparative Example B | Comparative Example C |
|---|---|---|---|---|---|
| Peroxide [ppm by weight] | 65 | 80 | 80 | 65 | 80 |
| Production rate [kg/h] | 125 | 125 | 125 | 125 | 125 |
| ZSK 50 screw speed [rpm] | 220 | 220 | 220 | 220 | 220 |
| ZSK 50 specific energy [kWh/t] | 225 | 225 | 222 | 225 | 225 |
| ZSK 58 screw speed [rpm] | 85 | 85 | 85 | 85 | 85 |
| ZSK 58 specific energy [kWh/t] | 89 | 88 | 92 | 90 | 91 |
| MFR₅ [g/10 min] | 0.19 | 0.19 | 0.19 | 0.19 | 0.20 |
| Gel > 700 µm [1/m²] | 39 | 39 | 27 | 112 | 145 |
| Gel area [ppm] | 470 | 486 | 341 | 597 | 778 |
| SAG value | 16.5 | 14.2 | 15.8 | 21.8 | 17.4 |

## Claims

1. A process for preparing a polyethylene composition comprising bimodal or multimodal polyethylene in an extruder device comprising the steps of
a) supplying a bimodal or multimodal polyethylene having a density determined according to DIN EN ISO 1183-1 :2004 at 23°C from 0.940 g/cm³ to 0.968 g/cm³ in form of a polyethylene powder to a mixing device;
b) supplying one or more additives which are not organic peroxides to the mixing device;
c) mixing the polyethylene powder and the additives at a temperature in the range from 10°C to 100°C without melting the polyethylene powder to form a mixture;
d) transferring the mixture comprising the polyethylene powder and the additives from the mixing device into the extruder device;
e) melting and homogenizing the mixture comprising the polyethylene powder and the additives within the extruder device to form a molten polyethylene composition; and
f) pelletizing the molten polyethylene composition,
wherein a liquid comprising an organic peroxide is added to the polyethylene powder or to a mixture comprising the polyethylene powder in an amount from 20 ppm to 200 ppm of organic peroxide with respect to the polyethylene powder, and the liquid is added to the polyethylene powder at a position where mixing occurs and where the polyethylene powder has a temperature of from 10°C to 100°C.

2. The process of claim 1, wherein the liquid comprising the organic peroxide is added to the polyethylene powder or to the mixture comprising the polyethylene powder in the mixing device prior or during step c).

3. The process of claim 1, wherein the liquid comprising the organic peroxide is added to the mixture comprising the polyethylene powder in the extruder device at a position where the mixture is not yet molten prior to step e).

4. The process of any of the previous claims, wherein the liquid comprising the organic peroxide is added to the polyethylene powder by passing the liquid with an injection pressure of 0.5 to 4 MPa through a spring injector comprising a preloaded spring.

5. The process of any of the previous claims, wherein the liquid comprising the organic peroxide is a peroxide solution having a content of active oxygen in the range from 0.1 wt.% to 10 wt.%.

6. The process of any of the previous claims, wherein the mixing of step c) is carried out in an atmosphere of reduced oxygen content and the oxygen content in the gas phase within the mixing device is less than 5 vol%.

7. The process of any of the previous claims, wherein the introduction of the mixture comprising the polyethylene powder and the additives into the extruder device occurs in an atmosphere of reduced oxygen content and the oxygen content in the hopper is less than 5 vol%.

8. The process of any of claims 1 to 6, wherein the extruder device is a combination of two co-rotating twin-screw extruders, the mixture comprising the polyethylene powder and the additives is transferred into a first twin-screw extruder, the second twin-screw extruder is provided with a molten polymer stream coming from the first twin-screw extruder, and the second twin-screw extruder completes the homogenization process.

9. The process of any of claims 1 to 6, wherein the extruder device is a counter-rotating continuous mixer equipped with gear pump or a co-rotating twin screw extruder equipped with gear pump.

10. The process of any of the previous claims, wherein the specific energy applied per amount of material being processed in step e) is from 120 kWh/t to 350 kWh/t.

11. The process of any of the previous claims, wherein the molten polyethylene composition is passed through a melt filter before being pelletized.

12. The process of any of the previous claims, wherein the bimodal or multimodal polyethylene has a M_{w}/Mₙ from 15 to 40 measured by GPC (Gel Permeation Chromatography).

13. The process of any of the previous claims, wherein the polymerization for preparing the bimodal or multimodal polyethylene is carried out in the presence of a polymerization catalyst which is a Ziegler- or Ziegler-Natta-catalyst comprising the reaction product of an aluminum alkyl with a titanium compound supported on a magnesium halide.

14. A process for preparing a pipe comprising the steps of
a) preparing a polyethylene composition by the process of any of claims 1 to 13; and
b) forming the polyethylene composition into a pipe.

## Patentansprüche

1. Verfahren zur Herstellung einer Polyethylenzusammensetzung, die bimodales oder multimodales Polyethylen umfasst, in einer Extrudervorrichtung, umfassend die Schritte:
a) Zuführen von einem bimodalen oder multimodalen Polyethylen mit einer Dichte, bestimmt gemäß DIN EN ISO 1183-1:2004 bei 23 °C, von 0,940 g/cm³ bis 0,968 g/cm³ in Form eines Polyethylenpulvers zu einer Mischvorrichtung;
b) Zuführen von einem oder mehreren Additiven, die nicht organische Peroxide sind, zu der Mischvorrichtung;
c) Mischen des Polyethylenpulvers und der Additive bei einer Temperatur im Bereich von 10 °C bis 100 °C ohne Schmelzen des Polyethylenpulvers, um eine Mischung zu bilden;
d) Überführen der Mischung, die das Polyethylenpulver und die Additive umfasst, aus der Mischvorrichtung in die Extrudervorrichtung;
e) Schmelzen und Homogenisieren der Mischung, die das Polyethylenpulver und die Additive umfasst, innerhalb der Extrudervorrichtung, um eine geschmolzene Polyethylenzusammensetzung zu bilden; und
f) Pelletieren der geschmolzenen Polyethylenzusammensetzung,
wobei eine Flüssigkeit, die ein organisches Peroxid umfasst, dem Polyethylenpulver oder einer Mischung, die das Polyethylenpulver umfasst, in einer Menge von 20 ppm bis 200 ppm organisches Peroxid, bezogen auf das Polyethylenpulver, zugefügt wird und die Flüssigkeit dem Polyethylenpulver an einer Position zugefügt wird, an der Mischen stattfindet, und wo das Polyethylenpulver eine Temperatur von 10 °C bis 100 °C aufweist.

2. Verfahren nach Anspruch 1, wobei die Flüssigkeit, die das organische Peroxid umfasst, dem Polyethylenpulver oder der Mischung, die das Polyethylenpulver umfasst, in der Mischvorrichtung vor oder während Schritt c) zugefügt wird.

3. Verfahren nach Anspruch 1, wobei die Flüssigkeit, die das organische Peroxid umfasst, der Mischung, die das Polyethylenpulver umfasst, in der Extrudervorrichtung an einer Position zugefügt wird, in der die Mischung vor Schritt e) noch nicht geschmolzen ist.

4. Verfahren nach einem der vorhergehenden Ansprüche, wobei die Flüssigkeit, die das organische Peroxid umfasst, dem Polyethylenpulver zugefügt wird, indem die Flüssigkeit mit einem Injektionsdruck von 0,5 bis 4 MPa durch einen Federinjektor, der eine vorgespannte Feder umfasst, geführt wird.

5. Verfahren nach einem der vorhergehenden Ansprüche, wobei die Flüssigkeit, die das organische Peroxid umfasst, eine Peroxidlösung mit einem Gehalt an aktivem Sauerstoff im Bereich von 0,1 Gew.% bis 10 Gew.% ist.

6. Verfahren nach einem der vorhergehenden Ansprüche, wobei das Mischen von Schritt c) in einer Atmosphäre mit reduziertem Sauerstoffgehalt durchgeführt wird und der Sauerstoffgehalt in der Gasphase innerhalb der Mischvorrichtung weniger als 5 Vol.% beträgt.

7. Verfahren nach einem der vorhergehenden Ansprüche, wobei die Einbringung der Mischung, die das Polyethylenpulver umfasst, und der Additive in die Extrudervorrichtung in einer Atmosphäre mit reduziertem Sauerstoffgehalt stattfindet und der Sauerstoffgehalt in dem Trichter weniger als 5 Vol.% beträgt.

8. Verfahren nach einem der Ansprüche 1 bis 6, wobei die Extrudervorrichtung eine Kombination aus zwei gleichsinnig drehenden Doppelschneckenextrudern ist, die Mischung, die das Polyethylenpulver umfasst, und die Additive in einen ersten Doppelschneckenextruder überführt werden, dem zweite Doppelschneckenextruder ein geschmolzener Polymerstrom bereitgestellt wird, der aus dem ersten Doppelschneckenextruder kommt, und der zweite Doppelschneckenextruder das Homogenisierungsverfahren abschließt.

9. Verfahren nach einem der Ansprüche 1 bis 6, wobei die Extrudervorrichtung ein gegensinnig rotierender kontinuierlicher Mischer ist, der mit einer Zahnradpumpe ausgestattet ist, oder ein gleichsinnig rotierender Doppelschneckenextruder ist, der mit einer Zahnradpumpe ausgestattet ist.

10. Verfahren nach einem der vorhergehenden Ansprüche, wobei die spezifische Energie, die pro Menge an Material, das in Schritt e) verarbeitet wird, eingesetzt wird, 120 kWh/t bis 350 kWh/t beträgt.

11. Verfahren nach einem der vorhergehenden Ansprüche, wobei die geschmolzene Polyethylenzusammensetzung durch einen Schmelzfilter geführt wird, bevor sie pelletiert wird.

12. Verfahren nach einem der vorhergehenden Ansprüche, wobei das bimodale oder multimodale Polyethylen ein Mw/Mn von 15 bis 40, gemessen gemäß GPC (Gelpermeationschromatographie), hat.

13. Verfahren nach einem der vorhergehenden Ansprüche, wobei die Polymerisation zum Herstellen des bimodalen oder multimodalen Polyethylens in Gegenwart eines Polymerisationskatalysators durchgeführt wird, der ein Ziegler- oder Ziegler-Natta-Katalysator ist, umfassend das Reaktionsprodukt eines Aluminiumalkyls mit einer Titanverbindung, geträgert auf einem Magnesiumhalogenid.

14. Verfahren zur Herstellung eines Rohrs, umfassend die Schritte:
a) Herstellen einer Polyethylenzusammensetzung durch das Verfahren nach einem der Ansprüche 1 bis 13; und
b) Formen der Polyethylenzusammensetzung zu einem Rohr.

## Revendications

1. Procédé de préparation d'une composition de polyéthylène comprenant du polyéthylène bimodal ou multimodal dans un dispositif d'extrusion, comprenant les étapes de
a) fourniture d'un polyéthylène bimodal ou multimodal présentant une densité, déterminée selon la norme DIN EN ISO 1183-1:2004 à 23 °C, de 0,940 g/cm³ à 0,968 g/cm³ sous la forme d'une poudre de polyéthylène à un dispositif de mélange ;
b) fourniture d'un ou de plusieurs additifs qui ne sont pas des peroxydes organiques au dispositif de mélange ;
c) mélange de la poudre de polyéthylène et des additifs à une température dans la plage de 10 °C à 100 °C sans faire fondre la poudre de polyéthylène afin de former un mélange ;
d) transfert du mélange comprenant la poudre de polyéthylène et les additifs à partir du dispositif de mélange dans le dispositif d'extrusion ;
e) fusion et homogénéisation du mélange comprenant la poudre de polyéthylène et les additifs à l'intérieur du dispositif d'extrusion afin de former une composition de polyéthylène fondu ; et
f) pelletisation de la composition de polyéthylène fondu,
un liquide comprenant un peroxyde organique étant ajouté à la poudre de polyéthylène ou à un mélange comprenant la poudre de polyéthylène en une quantité de 20 ppm à 200 ppm de peroxyde organique par rapport à la poudre de polyéthylène et le liquide étant ajouté à la poudre de polyéthylène en une position où le mélange se produit et où la poudre de polyéthylène présente une température de 10 °C à 100 °C.

2. Procédé selon la revendication 1, le liquide comprenant le peroxyde organique étant ajouté à la poudre de polyéthylène ou au mélange comprenant la poudre de polyéthylène dans le dispositif de mélange avant ou pendant l'étape c).

3. Procédé selon la revendication 1, le liquide comprenant le peroxyde organique étant ajouté au mélange comprenant la poudre de polyéthylène dans le dispositif d'extrusion en une position où le mélange n'est pas encore fondu avant l'étape e).

4. Procédé selon l'une quelconque des revendications précédentes, le liquide comprenant le peroxyde organique étant ajouté à la poudre de polyéthylène par passage du liquide à une pression d'injection de 0,5 à 4 MPa à travers un injecteur à ressort comprenant un ressort préchargé.

5. Procédé selon l'une quelconque des revendications précédentes, le liquide comprenant le peroxyde organique étant une solution de peroxyde présentant une teneur en oxygène actif dans la plage de 0,1 % en poids à 10 % en poids.

6. Procédé selon l'une quelconque des revendications précédentes, le mélange de l'étape c) étant effectué dans une atmosphère à teneur réduite en oxygène et la teneur en oxygène dans la phase gazeuse à l'intérieur du dispositif de mélange étant inférieure à 5 % en volume.

7. Procédé selon l'une quelconque des revendications précédentes, l'introduction du mélange comprenant la poudre de polyéthylène et les additifs dans le dispositif d' extrusion se produisant dans une atmosphère à teneur réduite en oxygène et la teneur en oxygène dans la trémie étant inférieure à 5 % en volume.

8. Procédé selon l'une quelconque des revendications 1 à 6, le dispositif d'extrusion étant une combinaison de deux extrudeuses à deux vis co-rotatives, le mélange comprenant la poudre de polyéthylène et les additifs étant transféré dans une première extrudeuse à deux vis, la seconde extrudeuse à deux vis étant alimenté en un flux de polymère fondu provenant de la première extrudeuse à deux vis et la seconde extrudeuse à deux vis achevant le procédé d'homogénéisation.

9. Procédé selon l'une quelconque des revendications 1 à 6, le dispositif d'extrusion étant un mélangeur continu contrarotatif équipé d'une pompe à engrenages ou une extrudeuse à deux vis co-rotatives équipée d'une pompe à engrenages.

10. Procédé selon l'une quelconque des revendications précédentes, l'énergie spécifique appliquée par quantité de matière traitée à l'étape e) étant de 120 kWh/t à 350 kWh/t.

11. Procédé selon l'une quelconque des revendications précédentes, la composition de polyéthylène fondu étant passée à travers un filtre à masse fondue avant d'être pelletisée.

12. Procédé selon l'une quelconque des revendications précédentes, le polyéthylène bimodal ou multimodal présentant un rapport Mw/Mn de 15 à 40, mesuré par CPG (chromatographie par perméation de gel).

13. Procédé selon l'une quelconque des revendications précédentes, la polymérisation destinée à préparer le polyéthylène bimodal ou multimodal étant effectuée en présence d'un catalyseur de polymérisation qui est un catalyseur de Ziegler ou de Ziegler-Natta comprenant le produit de réaction d'un composé d'alkylaluminium avec un composé de titane supporté sur un halogénure de magnésium.

14. Procédé de préparation d'un tuyau comprenant les étapes de
a) préparation d'une composition de polyéthylène par le procédé selon l'une quelconque des revendications 1 à 13 ; et
b) façonnage de la composition de polyéthylène en tuyau.
